# EUROPEAN PATENT SPECIFICATION

(11) **EP 0 541 296 B1**
(45) Date of publication and mention of the grant of the patent: **21.05.1997**
(21) Application number: 92309936.0
(22) Date of filing: 29.10.1992
(51) Int. Cl.: G01N 21/64, G01N 15/14, C12Q 1/68, G01N 35/00

(54) **Device for optically discriminating kinds of bases**
Vorrichtung zur optischen Unterscheidung von Basenarten
Appareil pour distinguer optiquement des types de bases

(30) Priority: 29.10.1991 JP 283024/91
(43) Date of publication of application: 12.05.1993
(73) Proprietor: HAMAMATSU PHOTONICS K.K., Shizuoka-ken (JP)
(72) Inventor: Hosoi, Shigeru, c/o Hamamatsu Photonics K. K., Hamamatsu-shi, Shizuoka-ken (JP); Hayakawa, Tsuyoshi, c/o Hamamatsu Photonics K. K., Hamamatsu-shi, Shizuoka-ken (JP); Tsuchiya, Hiroshi, c/o Hamamatsu Photonics K. K., Hamamatsu-shi, Shizuoka-ken (JP)
(74) Representative: Jenkins, Richard Gray

(56) References cited:
- GB-A- 2 056 670
- US-A- 3 728 081
- US-A- 4 962 037
- Derwent Publications Ltd., Week 8646, London, GB; AN 86-301808; & JP-A-61 223 650 & JP-A-61 223 650 (SHIMADZU SEISAKUSHO KK) 4 October 1986
- PATENT ABSTRACTS OF JAPAN, vol. 12, no. 479 (C-552) 14 December 1988; & JP-A-63 194 723 ( KAWANA YOSHIE ) 11 August 1988

## Description

This invention relates to a device for optically discriminating different kinds of bases. It is used to discriminate bases by detecting the fluorescence or luminescence of bases (nucleotides), particularly bases constituting a single fragment of DNA.

DNA (comprising deoxyribonucleic acid and hydrochloric acid as main components, and sugar and phosphoric acid bonded thereto), which is a constituent substance of a gene is in the form of double helical strands which contain genetic information. The genetic information is contained in DNA in a code-like form (as a sequence of bases), the genes are gathered in strings in the nucleus of each cell of the organism. Lower organisms, such as microorganisms, have thousands of base pairs at most, but higher animals and plants have a large quantity of genetic information and may have up to 100 billion base pairs or more (see a reference titled "Molecular Biology of Cell" by B. Albert, D. Bray, J.Lewis, M. Raff, K. Roberts, J.D, Watson (1983) published by Garland Publishing Inc.)

The genetic information in DNA, is determined by the sequence of its four constituent bases, adenine (A), guanine (G), cytosine (C) and thymine (T). Accordingly it is very important to determine the base sequence in order to develop genetic engineering, medical science. etc. in the future.

It is known that these bases emit intrinsic fluorescence. These bases can be discriminated from one another, by virtue of their fluorescence. To cause the bases to emit fluorescence, it is necessary to irradiate them with an excitation beam. To detect their fluorescence it is preferable to use detecting devices of high sensitivity, such as photo tubes (photomultipliers).

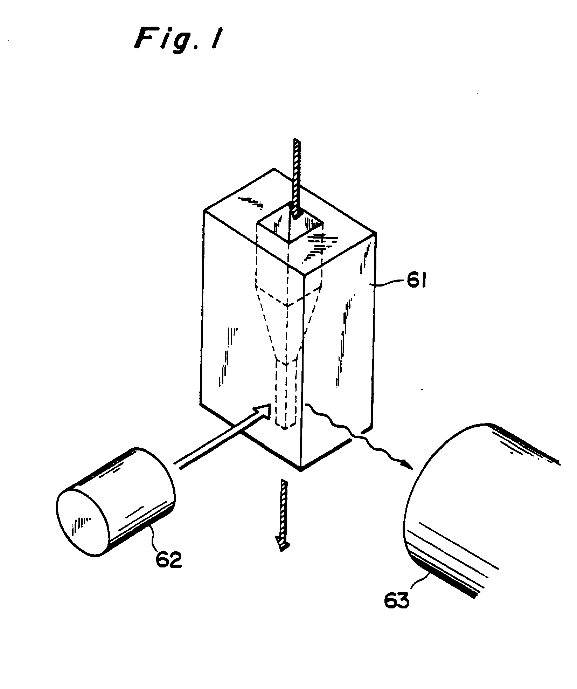

A conventional device to achieve this end is described in, e.g., "Chemical Physics Letters, (1990) 174; 552 - 557". In this device, as shown in FIG. 1, a laser beam is irradiated from a light source 62 onto the flow of fine particles from a flow cell 61 in a direction perpendicular thereto, and fluorescence is detected by a photomultiplier 63 in a direction perpendicular both to the direction of flow and to the irradiating source.

United States Patent No. 4,962,037, discloses a method in which the bases of a single fragment are selectively modified by fluorescent dyes which can identify the different bases. In this method, bases of a DNA fragment which have been severed by exonuclease III as shown in Fig. 1 are sequenced by detecting fluorescence spectra of fluorescent dyes characteristic of the respective bases.

Using this device, the fluorescence from the bases which constitute a single fragment cannot be detected very accurately or effectively because a single DNA has four kinds of bases, A, G, C and T, the numbers of the respective bases is very large, whilst the individual bases are very small, and are weak fluorescence emitters. Accordingly, it is impossible to accurately discriminate bases, by detecting the fluorescence emitted from them instantaneously as they pass an irradiating beam.

Periods of fluorescence emission can be prolonged, to improve fluorescence yields by applying an irradiating beam to a flow of bases over a large flow-wise area. But this causes bases which are fed one after another to be detected concurrently, and renders the processing of the data obtained difficult.

GB Patent No. 2 056 670 describes a moving light-reflecting tape containing depressions into which chemiluminescent or bioluminescent samples are introduced processed and measured.

An object of this invention is to provide a device to sequence the bases (A, G, C, T) forming a single fragment of DNA, specifically to provide a mechanical arrangement which can improve the efficiency of fluorescence detection or phosphorescence detection.

A first device for optically discriminating bases according to one embodiment of this invention comprises tape running means for running an elongate light reflecting specular tape lengthwise at a constant speed; base dropping means for separating a base from a single fragment of DNA and dropping the same onto the specular tape; an excitation light source for irradiating a beam onto the specular tape downstream of a position where the base is dropped; and optical detecting means for detecting fluorescence of the base due to the beam.

A second device for optically discriminating bases according to this invention comprises tape running means for running an elongate light-reflecting specular tape lengthwise at a constant speed; base dropping means for separating a base from a single fragment and dropping the same onto a surface of the specular tape; monoclonal antibody applying means for applying monoclonal antibodies corresponding to each of the different bases on the specular tape at a position upstream of the position where the base is dropped; luminous antibody supplying means for supplying luminous antibodies corresponding to each of the bases to the specular tape at a position downstream of the position where the base is dropped; washing means for washing the luminous antibodies, not combined with the bases on the surface of the specular tape at a position downstream of the position where the luminous antibodies are supplied; detecting means for detecting luminescence of the base while supplying a luminescent reagent to the specular tape at a position downstream of the washing position.

According to this invention, bases are cleaved and sequentially dropped onto a specular tape so that they are located separately from each other on the specular tape. In the first aspect of this invention, excitation light is irradiated onto the bases on the specular tape to cause them to emit fluorescence, enabling the bases to be discriminated one by one. Because the bases are located on the specular tape, none of the reflected beam is incident on the optical detecting means, and the fluorescence is incident on the optical detecting means.

According to the second aspect of this invention, a base is captured by a monoclonal antibody applied to the specular tape and then supplied with luminous antibodies. Consequently, by using different luminescent antibodies which luminesce at different wavelengths to bind to A, G, C and T, a single base can be discriminated from the other bases optically.

The present invention will become more fully understood from the detailed description given hereinbelow and the accompanying drawings which are given by way of illustration only, and thus are not to be considered as limiting the present invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.
FIG. 1 is a perspective view of the conventional device;
FIG. 2 is a perspective view of the device for discriminating bases by luminescence according to the first embodiment of this invention;
FIG. 3 is a structural view of the specular tape;
FIG. 4 is a structural view of the flow cell;
FIG. 5 is a block diagram of the optical detecting means;
FIG. 6 is a perspective view of the device for discriminating bases by luminescence according to the second embodiment of this invention;
FIG. 7 is a schematic representation of the principle the luminescence detection is based on; and
FIG. 8 is a perspective view explaining a method for running the specular tape, etc.

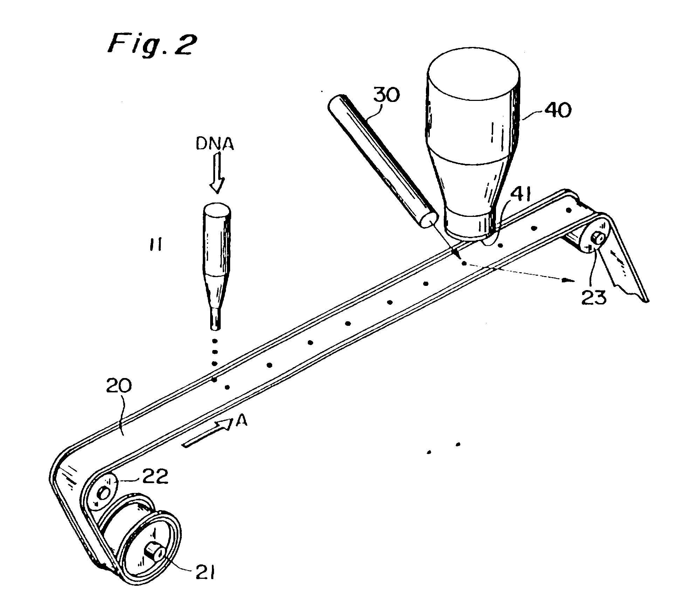

Embodiments of this invention will be explained with reference to FIGs. 2 to 8.

FIG. 2 is a perspective view of the device for discriminating the fluorescence of bases in DNA according to a first embodiment of this invention. This device comprises a flow cell 11 which traps single molecule consecutively, an elongate specular tape 20, onto a surface of which bases are supplied, a light source 30 for irradiating a beam to the surface of the specular tape 20, and a fluorescence detector 40 for detecting the fluorescence emitled by a base when it is irradiated by an excitation beam.

The specular tape 20 is wound on a drum 21 and is continuously fed out by rollers 22, 23. The tape 20 is run at a constant speed in the direction of the arrow A.

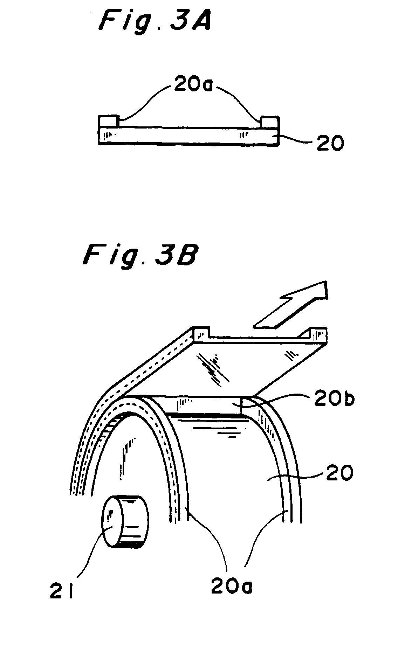

As shown in FIG. 3A, this specular tape 20 has walls 20a provided on both sides which define a gap 20b, as shown in FIG. 3B when the specular tape is wound on a drum 21. The gap 20b can protect the bases on the specular tape 20. The specular tape 20 is run at a constant speed by driving means and is controlled as will be described later so that one drop at a time is located within the spot of the irradiating laser beam which will be described later.

The specular tape which has been run may be taken up on a drum or left unwound, depending on the length of the single fragment of DNA to be identified.

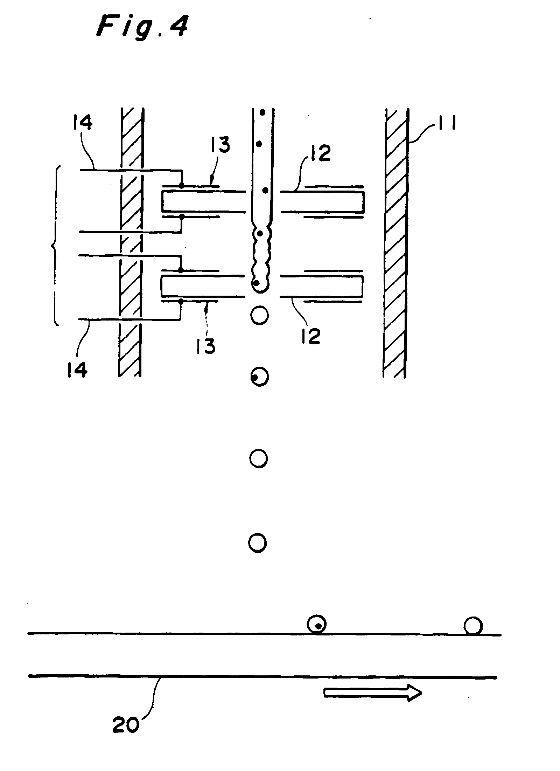

The flow cell 11 includes two ultrasonic traps 12 opposed to each other in a body 11. As shown in FIG. 4, each ultrasonic trap 12 has a piezoelectric element 13 and is connected to a piezoelectric driving circuit (a piezoelectric driver) through a line 14. A liquid containing DNA (a single fragment of DNA) flows through the flow cell 11, and standing waves are formed by the piezoelectric elements 13, so that, as shown in FIG. 4, the liquid is separated into drops. The drops which contain cleaved bases tall onto the specular tape 20 which is running at a constant speed in the direction of the arrow A toward the light source 30 and the fluorescence detector 40.

United state Patent No. 4, 962,037 describes the use of a solution containing the enzyme, exonuclease III, to cleave bases from a surge fragment of DNA. By maintaining the interior of the flow cell 11 at about 37 °C, exonuclease III can sever bases from an end of a single fragment at a rate of about 100 bases/s. Fine particles of the DNA sample are dropped at a rate of about 300 drops/s. This implies that some fine particles contain severed bases, but other fine particles contain no severed bases, this ensures accurate identification of the base sequence.

Ideally the fine particles dropped by the flow cell 11 have a diameter of about 30 µm. This is similar to the way in which ink is stuck to printing paper by ink jet printers.

On the assumption that a spot diameter of a light source which will be explained later is about 1 to 2 mm, the above-described drive means can drive the specular tape 20 at a speed of about 30 m/s for satisfactory fluorescence detection.

The light source 30 is, e.g., a laser and is used to continuously irradiate the specular tape 20 at a position where drops containing the bases are mounted. When the laser beam is obliquely incident as shown in FIG. 2 the reflected beam on the specular tape 20 exits obliquely. Consequently the incident light beam does not strike the fluorescence detector 40 directly. Even is a wavelength selecting filter 41 which will be explained below is imperfect, the reflected beam will not interfere with fluorescence detection.

The laser can be a continuous laser, or a pulsed laser the wavelength of which is about 30 µm.

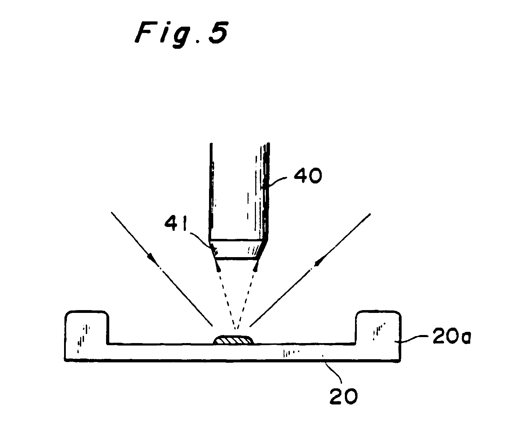

As shown in FIG. 5, the fluorescence detector 40 comprises, e.g., a photon counting television camera with an optical fiber, but may comprise a photo tube (photomultiplier). A wavelength selecting filter 41 is provided on the light detecting surface of the fluorescence detector 40 to prevent scattered light from the incident beam reaching the detector. The fluorescence detector 40 detects the fluorescence lifetime of a base and its wavelength. Based on the difference of the detected fluorescence lifetimesand that of their wavelengths, the bases (A, T, G, C) can be discriminated from one another. The fluorescence detection may be conducted off-line to prolong the detection period.

A wavelength selecting filter 41 for shutting radiation other than fluorescence characteristic of the respective bases is also provided. Four kinds of wavelength selecting filters 41 may be used. If one photomultiplier is used in detecting fluorescence, a mechanism is provided for sequentially switching the four kinds of wavelength selecting filters 41 to detect fluorescence. Alternatively, four photomultipliers each with one of the above-described wavelength selecting filters 41 secured thereto may be used, which dispenses with the above-described switching mechanism.

As a medium for storing a sequence of bases, the specular tape can be a storage medium which can perfectly secure a sequence, but it is possible to install electric string means for storing electric outputs from the fluorescence detector 40. It is very likely that the fluorescence characteristics of all of the bases (autofluorescence) is too weak for accurate detection of all the bases. Accordingly the fluorescence intensities intrinsic to all the bases may be augmented.

For example, "Photochemistry Photobiology (1968), vol. 7, pp. 189 - 201 describes that it has been confirmed that the autofluorescence of Base A (adenine) is augmented by lowering a temperature. Also J.EOSOMGER, "THE EXICTED STATES OF NUCLEIC ACIDS", Photochemistry Photobiology (1968), vol. 7, pp. 597 - 612, describes that the autofluorescence of all the bases have been augmented by lowering a temperature.

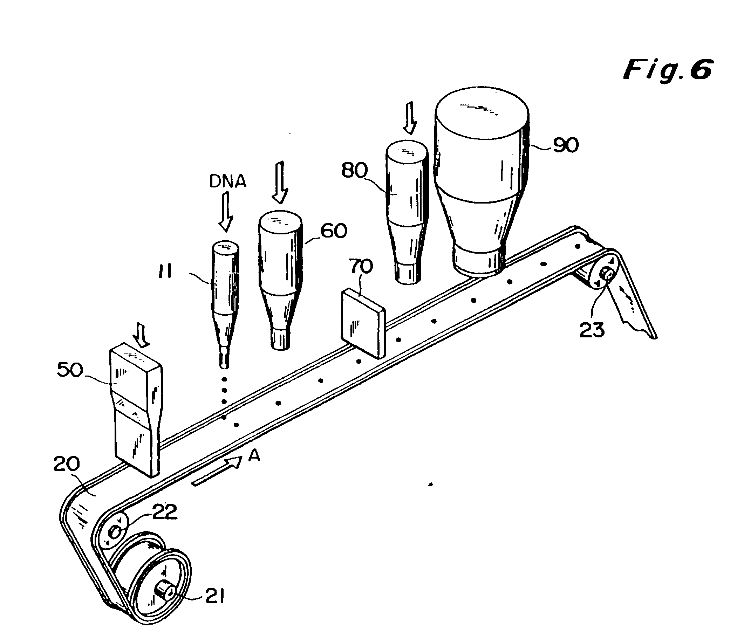

FIG. 6 is a perspective view of the device for discriminating luminescence corresponding to the different kinds of bases according to a second embodiment of this invention. The second embodiment is the same as the first embodiment in that the specular tape 20 is run, and bases are dropped from the flow cell 11 onto a surface of the specular tape 20. The former is different from the latter in that in this embodiment antibody applying means 50 are provided upstream of the flow cell 11, and downstream of the flow cell 11 there are provided luminous antibody supply means 60, luminescence reagent supply means 80 and a luminescence detector 90.

The antibody applying means 50 are for applying to the specular tape 20 monoclonal anti-A, -T, -G or -C, which have homogeneous molecules, corresponding to the bases A, T, G and C in DNA. This application may be made on-line as shown, or off-line beforehand. The luminous antibodies supply means 60 is for supplying luminous anti-A, -T, -G and -C, and the washing means 70 removes excess unbound luminous anti-A to -C. The application of the luminous antibodies, and the washing may be performed off-line.

The luminescence reagent supply means 80 is for supplying a reagent which combines with enzymes of the luminous anti-A to -C to cause luminescence. This luminescence is detected by the luminescence detector 90. The luminescence detector 90 is a photon counting television camera or a photomultiplier etc. which detects luminescence.

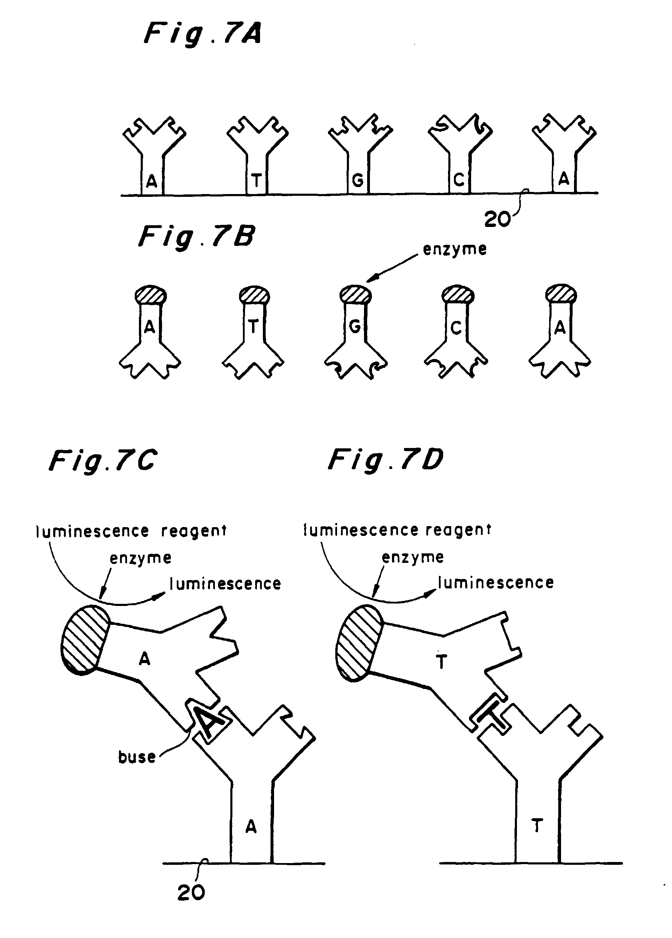

The luminescence detection in the second embodiment will be schematically explained. First, as shown in FIG. 7A, the antibody applying means 50 applies monoclonal anti-A to -C. These anti-A to -C combine selectively with their respective base when a base is dropped from the flow cell 11 it combines with its corresponding monoclonal anti-A to -C.

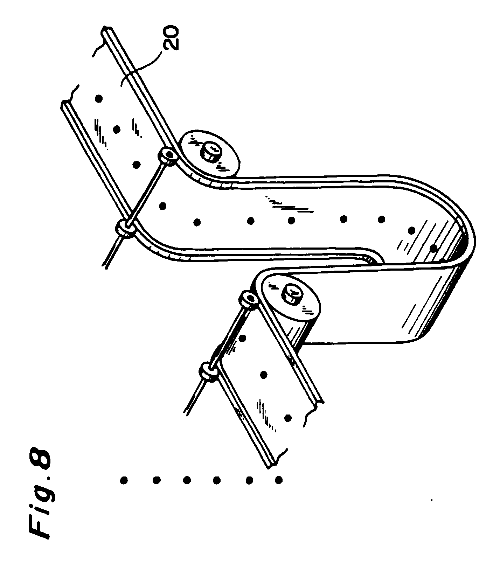

It will be clear that the chance of the bases A, G, T and C bonding with four kinds of the thus-applied monoclonal antibodies non specifically will reduce the accuracy of the device. The following methods are proposed for improving the bonding selectivity:
by partially loosening the specular tape 20 to allow sufficient time for competitive binding to occur as shown in fig. 8; and by increasing concentrations of coating materials applied to the specular tape 2- to facilitate selective binding.

The luminous anti-A to -C supplied by the luminous antibodies supply means 60 have respective luminous enzymes as shown in FIG. 7B, which uniquely combine with the bases A to C. Accordingly, as shown in FIG. 7C, the base A combines only with the monoclonal anti-A applied to the specular tape 20 and further only binds with the luminous anti-A. As shown in FIG. 7D, the monoclonal anti-T combines only with the base T, and the base T combines with the luminous anti-T. Accordingly by varying wavelengths of the luminescence of the respective enzymes, it is possible to discriminate the bases by the luminescence detection.

This invention is not limited to the above-described embodiments and covers various modifications. For example, a plurality of fluorescence detectors 40 and a plurality of luminescence detectors 90 may be provided. If a detection operation fails, the operation may be repeated. It is possible to repeat the luminescence or the fluorescence operation on one base applied to the specular tape 20 because once a base is applied to the specular tape 20, it is fixed. The specular tape 20 may be, a metal tape, it may be a tape coated with silicone, or other suitable material.

In the first embodiment, to efficiently discriminate the respective bases, fluorescent dyes, which are readily available may be directly bonded to each base, for example fluorescein-12-2'-deoxy-uridine-triphosphoate (Fluorescein-12-dUTP, "Biochemicals Catalog 1992 '93", BOEHRINGER MANNHEIM YAMANOUCHI K.K.) binds specifically to A. Specifically, in using a short wavelength laser, J.M. PROBER, etc., "A SYSTEM FOR RAPID DNA SEQUENCING WITH FLUORESCENT CHAIN-TERMINATING DIDEOXYMUCLEOTIDES", SCIENCE, vol. 238, pp. 336 - 341 (1987) described four kinds of fluorescent dyes and four kinds of wavelength selecting filters 41 which each transmit luminescence from one of the four fluorescent dyes.

A case in which a long wavelength laser is used in disclosed by L.M. SMITH et al., "FLUORESCENCE DETECTION IN AUTOMATED DNA SEQUENCE ANALYSIS", NATURE, vol. 321, pp. 674 - 679 (1986). These fluorescent dyes may be bonded (modified) to the bases before or after (FIG. 5) the bases are severed from the DNA fragment (United States Patent No. 4,962,037).

According to this invention, as described above, a base is dropped onto a moving specular tape such that the bases are applied onto the tape separately from one another. According to the first aspect of this invention, fluorescence is generated by irradiation with a laser beam.

Accordingly it is possible to identily consecutive bases. Because the bases are applied to specular tape, the reflected beam is never incident on the optical detecting means.

The thus-prepared specular tape is a storage medium which perfectly secures a sequence of bases.

According to the second aspect of this invention, a base is captured by a monoclonal antibody applied to the specular tape, and then a luminous antibody is applied.

Accordingly by providing luminescent antibodies which luminesce at different wavelengths the bases can be discriminated from one another by detecting their luminescence. Thus, a device for accurately and quickly discriminating the different kinds of bases (A, T, G, C) which constitute a single fragment of DNA is provided.

## Claims

1. A device for optically discriminating bases in DNA, comprising:
tape running means for running an elongate light reflecting specular tape lengthwise at a constant speed;
base dropping means for separating a base from a single fragment of DNA sequentially and dropping the same onto a surface of the specular tape;
a light source for irradiating a beam onto the specular tape at a position downstream of a position where the base is dropped; and
optical detecting means for detecting fluorescence.

2. A device as claimed in claim 1, wherein
the single fragment of DNA has the bases modified with identifiable fluorescent dye before cleavage.

3. A device as claimed in claims 1 to 2, wherein
the light source is a continuous laser or a pulse laser which emits short wavelength radiation.

4. A device as claimed in claims 1 to 3, wherein
the light source is installed oblique to the specular tape to prevent reflected beams from directly striking the optical detecting means.

5. A device as claimed in claims 1 to 4, wherein
the optical detecting means is selected from an optical detector, a photon counting television camera with an optical fiber, or a photomultiplier.

6. A device for optically discriminating bases in DNA comprising
tape running means for running an elongate light reflecting specular tape lengthwise at a constant speed;
base dropping means for separating a base from a single fragment of DNA sequentially and dropping the same onto a surface of the specular tape;
monoclonal antibody applying means for applying monoclonal antibodies corresponding to different kinds of bases onto the specular tape at a position upstream of a position where the base is dropped;
luminous antibody supplying means for supplying luminous antibodies corresponding to the different kinds of bases, combining with the monoclonal antibodies, to the specular tape at a position downstream of the position where the base is dropped;
washing means for washing the luminous antibodies, not combined with the bases, on the surface of the specular tape at a position downstream of a position where the luminous antibodies are supplied; and
optical detecting means for detecting luminescence of the bases while supplying a luminescence reagent to the specular tape at a position downstream of the washing position.

7. A device as claimed in claim 6, wherein
the monoclonal antibody applying means applies monoclonal antibodies to the entire surface of the specular tape, which selectively bind bases onto the specular tape.

8. A device as claimed in claim 6 or claim 7, wherein
the luminous antibodies supplied are selective for the bases specifically bonded with the monoclonal antibodies.

9. A device as claimed in claim 6 to claim 8, wherein
the washing means washes off nonbonded luminous antibodies.

10. A device as claimed in claim 6 to claim 9, wherein
the optical detecting means includes a luminescence reagent supply means for supplying a luminescence reagent onto the specular tape, and luminescence detector for detecting luminescence corresponding to the bases.

11. A device as claimed in any preceding claim, wherein
the tape running means comprises driving means for running the specular tape forwards or backwards in the longitudinal direction.

12. A device as claimed in any preceding claim, wherein
the specular tape is a metal-vaporized tape or a tape of an organic material, and has flexibility.

13. A device as claimed in any preceding claim, wherein
the specular tape is rolled before it is run, and after it is run, the specular tape is wound or left in its unwound state, depending on a length of a single fragment of DNA.

14. A device as claimed in any preceding claim, wherein
the specular tape has walls provided on both sides, and when the specular tape is wound, the walls define a gap between each winding and its adjacent winding.

15. A device as claimed in any preceding claim, wherein
the speed of the specular tape is controlled so that drops are dropped from the base dropping means on to the specular tape at an interval much wider than a dropping interval.

16. A device as claimed in any preceding claim, wherein
the dropping means is a flow cell for giving fine vibrations to a liquid containing a single fragment of DNA and dropping the liquid in fine particles.

17. A device as claimed in claim 16, wherein
the flow cell gives fine vibrations by a piezoelectric element.

18. A device as claimed in claim 16 or claim 17, wherein
some of the fine particles contain bases sequentially severed from an end of the single fragment of DNA, and others contain no bases.

19. A device as claimed in claims 16, 17 or 18, wherein
the liquid contains an enzyme which sequentially separates bases constituting the single fragment of DNA one by one from one end thereof.

20. A device as claimed in claim 16 to claim 19, wherein,
the flow cell drops the fine particles at a rate higher than a speed at which a base of the single fragment is severed.

21. A device as claimed in any preceding claim wherein the specular tape is run partially loosened.

22. A device as claimed in any preceding claim, wherein
the optical detecting means has wavelength selecting filters on the light detecting surface.

23. A device as claimed in any preceding claim, wherein
the optical detecting means includes electric storing means for storing electric outputs therefrom.

## Patentansprüche

1. Vorrichtung zur optischen Unterscheidung von Basen in der DNA, die folgendes aufweist:
eine Bandlaufeinrichtung zum Bewegen in Längsrichtung eines langgestreckten lichtreflektierenden Spiegelbandes bei einer konstanten Geschwindigkeit;
eine Basentropfeinrichtung zur sequentiellen Trennung einer Base von einem einzelnen DNA-Fragment und Tropfen derselben auf eine Oberfläche des Spiegelbandes;
eine Lichtquelle zur Strahlung eines Strahls auf das Spiegelband an eine Stelle, die sich abwärts einer Stelle befindet, wo die Base aufgetropft ist und
eine optische Nachweiseinrichtung zum Nachweis von Fluoreszenz.

2. Vorrichtung nach Anspruch 1, worin das einzelne DNA-Fragment Basen aufweist, die vor der Spaltung mit einem identifizierbaren Fluoreszenzfarbstoff modifiziert worden sind.

3. Vorrichtung nach den Ansprüchen 1 bis 2, worin die Lichtquelle ein kontinuierlicher Laser oder ein Impulslaser ist, der Strahlung kurzer Wellenlänge emittiert.

4. Vorrichtung nach den Ansprüchen 1 bis 3, worin die Lichtquelle schräg zum Spiegelband installiert ist, um zu verhindern, daß die reflektierten Strahlen direkt auf die optische Nachweiseinrichtung auftreffen.

5. Vorrichtung nach den Ansprüchen 1 bis 4, worin die optische Nachweiseinrichtung aus einem optischen Detektor, einer Photonen zählenden Fernsehkamera mit einer optischen Faser oder einem Photoelektronenvervielfacher ausgewählt ist.

6. Vorrichtung zur optischen Unterscheidung von Basen in der DNA, die folgendes aufweist:
eine Bandlaufeinrichtung zum Bewegen in Längsrichtung eines langgestreckten lichtreflektierenden Spiegelbandes bei einer konstanten Geschwindigkeit;
eine Basentropfeinrichtung zur sequentiellen Trennung einer Base von einem einzelnen DNA-Fragment und Tropfen derselben auf eine Oberfläche des Spiegelbandes;
Einrichtung zum Auftragen von monoklonalen Antikörpern zum Auftragen monoklonaler Antikörper, die verschiedenen Basenarten entsprechen, auf das Spiegelband an eine Stelle, die sich aufwärts einer Stelle befindet, wo die Base aufgetropft ist;
Einrichtung zum Zuführen von Leuchtantikörpern zum Zuführen von Leuchtantikörpern, die den verschiedenen Basenarten entsprechen, die mit den monoklonalen Antikörpern kombiniert sind, zum Spiegelband an eine Stelle, die sich abwärts einer Stelle befindet, wo die Base aufgetropft ist;
Wascheinrichtung zum Waschen der Leuchtantikörper, die nicht mit den Basen kombiniert sind, auf der Oberfläche des Spiegelbandes an einer Stelle, die sich abwärts einer Stelle befindet, wo die Leuchtantikörper zugeführt sind und
eine optische Nachweiseinrichtung zum Nachweis von Lumineszenz der Basen, während ein Lumineszenzreagenz dem Spiegelband an eine Stelle, die sich abwärts der Waschstelle befindet, zugeleitet wird.

7. Vorrichtung nach Anspruch 6, worin die Einrichtung zum Auftragen des monoklonalen Antikörpers monoklonale Antikörper auf die gesamte Oberfläche des Spiegelbandes aufträgt, die die Basen selektiv auf das Spiegelband binden.

8. Vorrichtung nach Anspruch 6 oder Anspruch 7, worin die zugeführten Leuchtantikörper für die Basen, die mit den monoklonalen Antikörpern spezifisch gebunden sind, selektiv sind.

9. Vorrichtung nach den Ansprüchen 6 bis 8, worin die Waschvorrichtung nicht gebundene Leuchtantikörper wegwäscht.

10. Vorrichtung nach den Ansprüchen 6 bis 9, worin die optische Nachweiseinrichtung eine Einrichtung zum Zuführen eines Lumineszenzreagenz zum Zuführen eines Lumineszenzreagenz auf das Spiegelband und einen Lumineszenzdetektor zum Nachweis von Lumineszenz, die den Basen entspricht, aufweist.

11. Vorrichtung nach einem der vorangegangenen Ansprüche, worin die Bandlaufeinrichtung eine Antriebseinrichtung zum Bewegen des Spiegelbands vorwärts oder rückwärts in Längsrichtung aufweist.

12. Vorrichtung nach einem der vorangegangenen Ansprüche, worin das Spiegelband ein metallaufgedampftes Band oder ein Band aus einem organischen Material ist und Flexibilität aufweist.

13. Vorrichtung nach einem der vorangegangenen Ansprüche, worin das Spiegelband, bevor es bewegt wird, aufgerollt ist, und das Spiegelband, nachdem es bewegt worden ist, aufgerollt oder in seinem unaufgerollten Zustand gelassen wird, was von einer Länge eines einzelnen DNA-Fragments abhängt.

14. Vorrichtung nach einem der vorangegangenen Ansprüche, worin das Spiegelband Wände aufweist, die an beiden Seiten vorgesehen sind, und wenn das Spiegelband aufgerollt ist, bilden die Wände eine Lücke zwischen jeder Windung und seiner benachbarten Windung.

15. Vorrichtung nach einem der vorangegangenen Ansprüche, worin die Geschwindigkeit des Spiegelbandes so gesteuert wird, daß die Tropfen von der Basentropfeinrichtung auf das Spiegelband in einem Abstand getropft werden, der viel breiter als ein Tropfabstand ist.

16. Vorrichtung nach einem der vorangegangenen Ansprüche, worin die Tropfeinrichtung eine Fließzelle zum Abgeben feiner Schwingungen an eine Flüssigkeit, die ein einzelnes DNA-Fragment enthält und Tropfen der Flüssigkeit in feine Teilchen ist.

17. Vorrichtung nach Anspruch 16, worin die Fließzelle feine Schwingungen mittels eines piezoelektrischen Elements abgibt.

18. Vorrichtung nach Anspruch 16 oder 17, worin einige der feinen Teilchen Basen enthalten, die von einem Ende des einzelnen DNA-Fragments sequentiell abgetrennt sind und andere keine Basen enthalten.

19. Vorrichtung nach Anspruch 16, 17 oder 18, worin die Flüssigkeit ein Enzym enthält, das die Basen, die das einzelne DNA-Fragment bilden, eine nach der anderen von einem Ende davon sequentiell abtrennt.

20. Vorrichtung nach den Ansprüchen 16 bis 19, worin die Fließzelle die feinen Teilchen bei einer Rate tropft, die höher als eine Geschwindigkeit ist, bei der eine Base des einzelnen Fragments abgetrennt wird.

21. Vorrichtung nach einem der vorangegangenen Ansprüche, worin das Spiegelband teilweise gelockert bewegt wird.

22. Vorrichtung nach einem der vorangegangenen Ansprüche, worin die optische Nachweiseinrichtung Filter zum Wählen der Wellenlänge auf der Lichtnachweisoberfläche aufweist.

23. Vorrichtung nach einem der vorangegangenen Ansprüche, worin die optische Nachweiseinrichtung einen Elektrospeicher zum Speichern von elektrischen Leistungen davon aufweist.

## Revendications

1. Dispositif pour distinguer optiquement des bases d'ADN, comportant :
des moyens d'entraînement de ruban pour entraîner un ruban spéculaire réfléchissant la lumière, allongé, dans le sens de la longueur, à vitesse constante ;
des moyens pour laisser tomber en goutte-à-goutte une base pour séparer une base à partir d'un fragment unique d'ADN de manière séquentielle et laisser tomber celle-ci en goutte à goutte sur une surface du ruban spéculaire ;
une source lumineuse pour irradier un faisceau sur le ruban spéculaire à une position située en aval d'une position où la base est laissée tomber en goutte-à-goutte ; et
des moyens de détection optique pour détecter une fluorescence.

2. Dispositif selon la revendication 1, dans lequel le fragment unique d'ADN a ses bases modifiées par un colorant fluorescent identifiable, avant clivage.

3. Dispositif selon la revendication 1 ou 2, dans lequel la source lumineuse est un laser continu ou un laser impulsionnel qui émet des radiations à longueur d'onde courte.

4. Dispositif selon les revendications 1 à 3, dans lequel la source lumineuse est installée en oblique par rapport au ruban spéculaire pour empêcher les faisceaux réfléchis de frapper directement les moyens de détection optique.

5. Dispositif selon les revendications 1 à 4, dans lequel les moyens de détection optique sont sélectionnés parmi le groupe constitué d'un détecteur optique, d'une caméra de télévision de comptage de photons à l'aide d'une fibre optique, ou un photomultiplicateur.

6. Dispositif pour distinguer optiquement des bases d'ADN comportant
des moyens d'entraînement de ruban pour entraîner un ruban spéculaire réfléchissant la lumière, allongé, dans le sens de la longueur, à vitesse constante ;
des moyens pour faire tomber en goutte-à-goutte de bases pour séparer une base à partir d'un fragment unique d'ADN de manière séquentielle et laisser tomber celle-ci en goutte-à-goutte sur une surface du ruban spéculaire ;
des moyens d'application d'anticorps monoclonaux pour appliquer des anticorps monoclonaux correspondant aux différents types de bases sur le ruban spéculaire à une position située en amont d'une position où la base est laissée tomber en goutte-à-goutte ;
des moyens d'application d'anticorps lumineux pour appliquer des anticorps lumineux correspondant aux différents types de bases, se combinant avec les anticorps monoclonaux, sur le ruban spéculaire à une position située en aval de la position où la base est laissée tomber en goutte-à-goutte ;
des moyens de lavage pour laver les anticorps lumineux, non-associés aux bases, sur la surface du ruban spéculaire à une position située en aval d'une position où les anticorps lumineux sont appliqués ; et
des moyens de détection optique pour détecter une luminescence des bases pendant l'application d'un réactif luminescent sur le ruban spéculaire à une position située en aval de la position de lavage ;

7. Dispositif selon la revendication 6, dans lequel les moyens d'application d'anticorps monoclonaux appliquent des anticorps monoclonaux sur la surface entière du ruban spéculaire, qui, de manière sélective, se lient aux bases sur le ruban spéculaire.

8. Dispositif selon la revendication 6 ou 7, dans lequel les anticorps lumineux appliqués sont sélectifs pour les bases liées de manière spécifique avec les anticorps monoclonaux.

9. Dispositif selon les revendications 6 à 8, dans lequel les moyens de lavage lave des anticorps lumineux non liés.

10. Dispositif selon les revendications 6 à 9, dans lequel les moyens de détection optique comportent des moyens d'application de réactif luminescent pour appliquer un réactif luminescent sur le ruban spéculaire, et un détecteur de luminescence pour détecter la luminescence correspondant aux bases.

11. Dispositif selon l'une quelconque des revendications précédentes, dans lequel les moyens d'entraînement de ruban comporte des moyens de commande pour entraîner le ruban spéculaire en avant ou en arrière dans la direction longitudinale.

12. Dispositif selon l'une quelconque des revendications précédentes, dans lequel le ruban spéculaire est un ruban vaporisé de métal ou un ruban constitué d'un matériau organique, et est flexible.

13. Dispositif selon l'une quelconque des revendications précédentes, dans lequel le ruban spéculaire est enroulé avant qu'il ne soit entraîné, et après son entraînement, le ruban spéculaire est enroulé ou laissé dans son état non enroulé, en fonction de la longueur d'un fragment unique d'ADN.

14. Dispositif selon l'une quelconque des revendications précédentes, dans lequel le ruban spéculaire a des parois agencées sur les deux côtés, et lorsque le ruban spéculaire est enroulé, les parois définissent un espace entre chaque enroulement et son enroulement adjacent.

15. Dispositif selon l'une quelconque des revendications précédentes, dans lequel la vitesse du ruban spéculaire est commandée afin que les gouttes soient laissées tomber à partir des moyens pour laisser tomber en goutte-à-goutte une base sur le ruban spéculaire à un intervalle plus grand qu'un intervalle de mise en goutte-à-goutte.

16. Dispositif selon l'une quelconque des revendications précédentes, dans lequel les moyens pour laisser tomber en goutte-à-goutte sont une cellule d'écoulement destinée à donner de fines vibrations à un liquide contenant un fragment unique d'ADN et à laisser tomber en goutte-à-goutte le liquide sous la forme de fines particules.

17. Dispositif selon la revendication 16, dans lequel la cellule d'écoulement donne de fines vibrations par un élément piézo-électrique.

18. Dispositif selon la revendication 16 ou 17, dans lequel certaines des fines particules contiennent des bases séparées de manière séquentielle à partir d'une extrémité du fragment unique d'ADN, et d'autres ne contiennent aucune base.

19. Dispositif selon les revendications 16, 17 ou 18, dans lequel le liquide contient une enzyme qui de manière séquentielle sépare des bases constitutives du fragment unique d'ADN une par une à partir d'une extrémité de celui-ci.

20. Dispositif selon les revendications 16 à 19, dans lequel la cellule d'écoulement met en goutte-à-goutte les fines particules à une vitesse plus élevée que la vitesse à laquelle une base du fragment unique est coupée.

21. Dispositif selon l'une quelconque des revendications précédentes, dans lequel le ruban spéculaire est entraîné de manière partiellement relâché.

22. Dispositif selon l'une quelconque des revendications précédentes, dans lequel les moyens de détection optique ont des filtres de sélection de longueur d'onde sur la surface de détection de lumière.

23. Dispositif selon l'une quelconque des revendications précédentes, dans lequel les moyens de détection optique comportent des moyens de stockage électrique pour stocker des sorties électriques de celui-ci.
